# EUROPEAN PATENT SPECIFICATION

(11) **EP 2 097 207 B1**
(45) Date of publication and mention of the grant of the patent: **06.04.2011**
(21) Application number: 07819716.7
(22) Date of filing: 09.11.2007
(51) Int. Cl.: B23K 11/11

(54) **METHOD FOR SPOT WELDING, AND SPOT WELDED SHEET MATERIAL**
PUNKTSCHWEISSVERFAHREN UND PUNKTGESCHWEISSTES FLÄCHENMATERIAL
PROCÉDÉ DE SOUDAGE PAR POINTS, ET MATÉRIAU EN FEUILLE SOUDÉ PAR POINTS

(30) Priority: 14.11.2006 EP 06023635
(43) Date of publication of application: 09.09.2009
(73) Proprietor: Corus Staal BV, 1970 CA Ijmuiden (NL)
(72) Inventor: DEN UIJL, Nick Johannes, 1502 RX Zaandam (NL); SMITH, Sullivan Manning, 1941 BE Beverwijk (NL)
(74) Representative: Kruit, Jan
(86) International application number: PCT/EP2007/009716
(87) International publication number: WO 2008/058675

(56) References cited:
- FR-A1- 2 709 436
- GB-A- 476 794
- JP-A- 2002 336 970
- US-A- 6 107 595

## Description

The invention relates to a method for producing a resistance spot weld for connecting two or more layers of metal sheet material. The invention also relates to a device or part comprising two layers of steel sheet material connected by a resistance spot weld.

In the automotive industry spot welding is often used to connect two or more layers of sheet material. Spot welding is an easy and fast way to connect different parts of an automobile, especially of the bodywork. With conventional steel types, spot welding provides a connection that satisfies the strength criteria of the automotive industry. The strength of resistance spot welds is usually tested using 'peel' type loading. It is a prerequisite in the automotive industry that in a peel test the sheet material fails, and not the resistance spot weld itself. In this way the amount of energy absorption during a crash is maximised.

Nowadays the automotive industry more and more tends to use high strength steels and advanced high strength steels. Such steels are difficult to weld, and consequently difficult to spot weld. It has been found that a temper treatment after spot welding can improve the spot weld by lowering the hardness of the weld (see FR-A-2 709 436 or US-A-6 107 595).

However, it has been found that a temper treatment in certain cases is not enough. Tests have shown that especially for layers of advanced high strength steel material having a relatively high carbon content, in which an amount of phosphor is present, the resistance spot weld will fail in a peel type loading. This would mean that such steel types could not be used for automotive spot welding purposes.

It is an object of the invention to provide an improved method for producing a resistance spot weld for connecting two or more layers of metal sheet material.

It is another object of the invention to provide a method for producing a resistance spot weld, which gives a weld having improved peel loading properties.

It is a further object of the invention to provide an improved device or part comprising two or more layers of steel sheet material connected by a resistance spot weld.

According to the invention, at least one of these objects is achieved with a method for producing a resistance spot weld for connecting two or more layers of metal sheet material, comprising the following steps:
- step 1: welding the layers by applying a current pulse to form a weld;
- step 2: reheating the weld formed in step 1 by applying a current pulse such that the edges of the weld re-melt;
- step 3: tempering the weld.

The invention provides an additional step between the forming of the weld and the tempering of the weld by applying a current pulse. This additional step 2 is added so as to re-melt grains formed in the weld during step 1. It has been found that after the current pulse of step 1, long grains are formed in the molten area of the weld, of which the longitudinal axis are oriented perpendicular to the sides of the weld where the electrodes of the spot welding apparatus contact the layers of sheet material. Most part of the remainder of the weld is filled with long grains directed more or less perpendicular to the above grains, and the longitudinal axis of these last grains are thus oriented substantially in the same plane as the layers of the sheet material. Some elements, such as phosphor, that are present in the molten area of the spot weld segregate on the grain boundaries of these grains during the cooling of the molten area. In a peel test the layers first split along the grain boundaries of the long grains in the weld in the same plane as the layers, which have a low strength due to for instance the phosphor, and thereafter the weld fails along the grain boundaries of the grains perpendicular to the plane of the layers. As a result, the failure of the weld dissipates only a small amount of energy.

Due to the addition of step 2, the weld partially re-melts, especially at the edges of the weld. During cooling after the re-melting the re-melted area re-solidifies, but due to the partial re-melting the grains formed are shorter and more randomly oriented than the grains formed after step 1. Thus, the weaker grain boundaries are also present in a more random orientation, and during a peel test the layers will not split along the grain boundaries. As a result, the layers (or one of the layers) will fail in the full sheet material, which is called a full plug failure.

The tempering step 3 is added to reduce the hardness of the fully martensitic weld microstructure which is formed during the cooling of the molten weld area, thus improving the mechanical properties of the weld in terms of ductility.

Preferably, the metal sheet material is steel sheet material containing carbon and phosphor, more preferably having a carbon content between 0.16 wt% and 0.40 wt%. For steel sheet material having a carbon content of 0.16 wt% or more, the addition of step 2 according to the invention is necessary to achieve a full plug failure of the spot welded material.

It has been found that the invention is especially advantageous for spot welding such steel sheet material having a phosphor content between 0.01 wt% and 0.3 wt%. Steel containing more than 0.01 wt% phosphor is especially vulnerable for segregation of phosphor along the grain boundaries.

Preferably between step I and step 2 the weld is cooled, more preferably to a temperature above room temperature. The cooling is provided to cool the weld before it is reheated in step 2. When the weld is not cooled to room temperature, the remaining heat in the weld can help to re-orientate the crystals after step 2.

Preferably, also between step 2 and step 3 the weld is cooled, more preferably to room temperature or above room temperature. It is thus possible to fully cool the layers that have been spot welded, and apply a tempering treatment after the spot welding of the layers has been finished.

According to a preferred embodiment the current pulse of step 2 is applied with a current that is higher than the current applied in the current pulse of step 1.

Preferably, step 1 and step 2 are performed with one and the same spot welding apparatus. In this way, the steps 1 and 2 can be performed directly after each other, and only a minimum cooling time has to be used between step 1 and step 2. However, it should be possible to use two pairs of welding electrodes and perform step 1 at the same time as step 2 on a previous weld. This may however require special welding robots and welding programs.

According to a preferred method, the spot welding apparatus is also used for performing step 3. The tempering of the weld is thus performed using only a little bit of additional time for each weld, and a separate tempering treatment as described above is not needed.

Preferably the welding electrodes of the spot welding apparatus remain in contact with the metal sheets between the respective steps. Thus the cooling between the steps be as short as possible due to the cooling by the electrodes.

According to a second aspect the invention provides a device or part comprising two or more layers of steel sheet material connected by a resistance spot weld, the steel material containing phosphor and having a carbon content between 0.16 wt% and 0.40 wt%, wherein the spot weld contains tempered polygonal grains located at the edge of the weld zone. Due to the polygonal grains the microstructure of the weld is stronger than the microstructure of the steel surrounding it, and a full plug failure will occur in high carbon steels containing phosphor, which has not been possible before.

Preferably, the resistance spot weld has been produced in accordance with any one of the method steps described hereinabove.

Preferably the steel material is a TRIP steel. Especially for TRIP steels it has been found that with normal resistance welding techniques a full plug failure is not accomplished in a peel loading test.

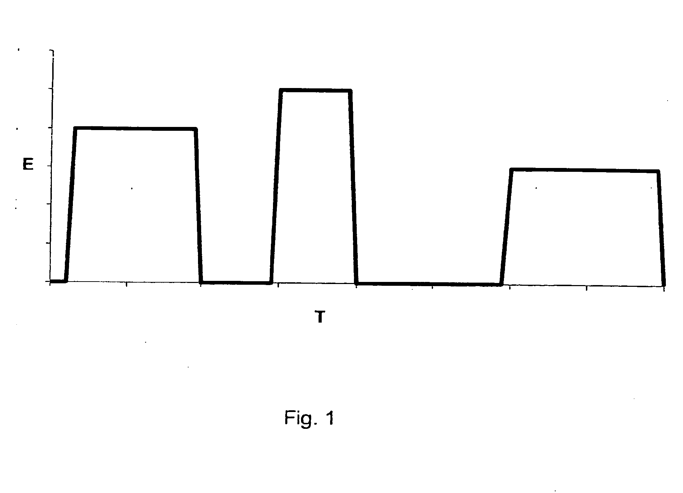

The invention will be elucidated hereinafter, also referring to the accompanying drawing.

The figure schematically shows the three welding steps of the method according to the invention.

During experiments use has been made of TRIP steel material. TRIP steel is an ultra-high strength steel, and is an abbreviation of transformation induced plasticity steel. TRIP steels have a reasonably high elongation and a high yield strength. The carbon content is high, usually above 0.18 wt%, and phosphor is always present as an unavoidable impurity. Phosphor however also is an effective strengthener of steel.

Experiments have been performed on two TRIP 700 steels:
TRIP 700A with 0.187 wt% C, 1.620 wt% Mn, 0.350 wt% Si, and 0.087 wt% P
TRIP 700B with 0.216 wt% C, 1.640 wt% Mn, 0.456 wt% Si, and 0.033 wt% P.

Two layers of these TRIP 700 steels (each time the same TRIP steel) have been spot welded in accordance with the usual resistance spot welding procedure, as described in ISO 18278-1, using a standard spot welding apparatus with welding electrodes. This is step 1 of the three-step method according to the present invention.

Thereafter the weld has been allowed to cool, but to a temperature above room temperature, while the electrodes remain in contact with the layers.

Then as step 2 a second current pulse is applied, such that the weld zone re-melts along the weld edges. The energy added to the weld should be lower than in step 1, because the weld formed in step 1 should not re-melt in full.

The weld is again allowed to cool, and in step 3 reheated with a final current pulse, but during this step the temperature of the weld must be lower than the Ac₁ temperature to temper the martensite weld material. In this way, the hardness of the weld is lowered.

The figure schematically shows the energy input E as a function of the process time T. The first energy input, which is step 1 in the method, is a current pulse in accordance with the usual energy input to form a resistance spot weld. After a short cooling time, in step 2 a second pulse is given with a current that is higher, but shorter in time than the current pulse of step 1. Thus, the weld is at most fully reheated. Thereafter a second cooling time is provided that is longer than the first cooling time. In step 3 a third current pulse is given with a current that is lower but somewhat longer than the current pulse of step 1. During step 3, the temperature of the weld has to remain below the Ac₁ temperature. The pulse time of the step 1 is in the order of 20 cycles of 50 Hz.

Testing of the resistance spot welds according to the invention is performed with peel testing, chisel testing and cross tension testing. All three these tests effectively perform a peel test on the spot weld. These tests are described in ISO 10447 and ISO 14272. The experiments show that with the resistance spot welding in accordance with the invention of the above TRIP 700A and TRIP 700B, a successful full plug failure is achieved, meaning that the spot welds itself remain undamaged, but one of the layers just outside the spot weld is ruptured.

It will be clear to the person skilled in the art that the height and length of the current in the steps 1, 2 and 3, respectively, depends on the material of the layers to be spot welded, and also on the thicknesses thereof. Also the cooling periods can be varied, and the tempering step 3 can take place in another way. The current height and length will also vary depending on the form of the electrodes of the spot welding apparatus.

It will also be clear that the method of the invention can be used for any steel type having a high carbon content.

## Claims

1. Method for producing a resistance spot weld for connecting two or more layers of metal sheet material, comprising the following steps:
- step 1: welding the layers by applying a current pulse to form a weld;
- step 2: reheating the weld formed in step 1 by applying a current pulse such that at least the edges of the weld re-melt;
- step 3: tempering the weld.

2. Method according to claim 1, wherein the metal sheet material is steel sheet material containing carbon and phosphor, preferably having a carbon content between 0.16 wt% and 0.40 wt%.

3. Method according to claim 2, wherein the steel sheet material has a phosphor content between 0.01 wt% and 0.3 wt%.

4. Method according to any one of the preceding claims, wherein between step 1 and step 2 the weld is cooled, preferably to a temperature above room temperature.

5. Method according to any one of the preceding claims, wherein between step 2 and step 3 the weld is cooled, preferably to room temperature or above room temperature.

6. Method according to any one of the preceding claims, wherein the current pulse of step 2 is applied with a current that is higher than the current applied in the current pulse of step 1.

7. Method according to any one of the preceding claims, wherein step 1 and step 2 are performed with one and the same spot welding apparatus.

8. Method according to claim 7, wherein the spot welding apparatus is used for performing step 3.

9. Method according to claim 7 or 8, wherein the welding electrodes of the spot welding apparatus remain in contact with the metal sheets between the respective steps.

10. Device or part comprising two or more layers of steel sheet material connected by a resistance spot weld, the steel material containing phosphor and having a carbon content between 0.16 wt% and 0.40 wt%, wherein the spot weld contains tempered polygonal grains located at the edge of the weld zone.

11. Method of producing a device or part according to claim 10, wherein the resistance spot weld has been produced in accordance with any one of the claims 1 - 9.

12. Device or part comprising according to claim 10 or 11, wherein the steel material is a TRIP steel.

## Patentansprüche

1. Verfahren zum Herstellen einer Widerstandspunkt-Schweißung zum Verbinden von zwei oder mehreren Lagen von Metallblechmaterial, umfassend die folgenden Schritte:
- Schritt 1: das Schweißen der Lagen durch Aufbringen eines Strompulses, um eine Schweißung zu bilden;
- Schritt 2: das erneute Erhitzen der in Schritt 1 gebildeten Schweißung durch Aufbringen eines Strompulses derart, dass mindestens die Kanten der Schweißung erneut schmelzen;
- Schritt 3: das Anlassen der Schweißung.

2. Verfahren nach Anspruch 1, wobei das Metallblechmaterial Stahlblechmaterial ist, das Kohlenstoff und Phosphor enthält und bevorzugt einen Kohlenstoffgehalt zwischen 0,16 Gew. -% und 0,40 Gew.-% aufweist.

3. Verfahren nach Anspruch 2, wobei das Stahlblechmaterial einen Phosphorgehalt zwischen 0,01 Gew. -% und 0,3 Gew. -% aufweist.

4. Verfahren nach einem der vorhergehenden Ansprüche, wobei die Schweißung zwischen Schritt 1 und Schritt 2, bevorzugt auf eine Temperatur über der Raumtemperatur, abgekühlt wird.

5. Verfahren nach einem der vorhergehenden Ansprüche, wobei die Schweißung zwischen Schritt 2 und Schritt 3, bevorzugt auf die Raumtemperatur oder eine Temperatur über der Raumtemperatur, abgekühlt wird.

6. Verfahren nach einem der vorhergehenden Ansprüche, wobei der Strompuls des Schritts 2 mit einem Strom aufgebracht wird, der höher ist als der Strom, der im Strompuls von Schritt 1 aufgebracht wird.

7. Verfahren nach einem der vorhergehenden Ansprüche, wobei Schritt 1 und Schritt 2 mit ein und demselben Punktschweißapparat ausgeführt werden.

8. Verfahren nach Anspruch 7, wobei der Punktschweißapparat zum Durchführen von Schritt 3 eingesetzt wird.

9. Verfahren nach Anspruch 7 oder 8, wobei die Schweißelektroden des Bunktschweißapparats zwischen den jeweiligen Schritten mit den Metallblechen in Kontakt bleiben.

10. Gerät oder Teil umfassend zwei oder mehrere Lagen von Stahlblechmaterial, die durch eine Widerstandspunktschweißung verbunden sind, wobei das Stahlmaterial Phosphor enthält und einen Kohlenstoffgehalt zwischen 0,16 Gew. -% und 0,40 Gew. -% aufweist, wobei die punktschweißung angelassene polygonale Körner enthält, die sich an den Kanten der Schweißzone befinden.

11. Verfahren zum Herstellen eines Geräts oder Teils nach Anspruch 10, wobei die Widerstandspunkt-Schweißung einem der Ansprüche 1 - 9 gemäß hergestellt worden ist.

12. Gerät oder Teil nach Anspruch 10 oder 11, wobei das Stahlmaterial ein TRIP-Stahl ist.

## Revendications

1. Procédé pour produire par résistance une soudure par points qui raccorde au moins deux couches d'un matériau en tôle métallique, le procédé comprenant les étapes suivantes :
- étape 1 : souder les couches en appliquant une impulsion de courant pour former une soudure,
- étape 2 : rechauffer la soudure formée au cours de l'étape 1 en appliquant une impulsion de courant telle qu'au moins les bords de la soudure refondent,
- étape 3 : durcir la soudure.

2. Procédé selon la revendication 1, dans lequel le matériau en tôle métallique est un matériau en tôle d'acier qui contient du carbone et du phosphore et dont la teneur en carbone est de préférence comprise entre 0,16 % en poids et 0,40 % en poids.

3. Procédé selon la revendication 2, dans lequel le matériau en tôle d'acier présente une teneur en phosphore comprise entre 0,01 % en poids et 0,3 % en poids.

4. Procédé selon l'une quelconque des revendications précédentes, dans lequel entre l'étape 1 et l'étape 2, la soudure est refroidie de préférence à une température supérieure à la température ambiante.

5. Procédé selon l'une quelconque des revendications précédentes, dans lequel entre l'étape 2 et l'étape 3, la soudure est refroidie de préférence à température ambiante ou à une température supérieure à la température ambiante.

6. Procédé selon l'une quelconque des revendications précédentes, dans lequel l'impulsion de courant de l'étape 2 est appliquée à un courant supérieur au courant appliqué lors de l'impulsion de courant de l'étape 1.

7. Procédé selon l'une quelconque des revendications précédentes, dans lequel l'étape 1 et l'étape 2 sont réalisées avec un seul et même appareil de soudage par points.

8. Procédé selon la revendication 7, dans lequel l'appareil de soudage par points est utilisé pour réaliser l'étape 3.

9. Procédé selon les revendications 7 ou 8, dans lequel les électrodes de soudage de l'appareil de soudage par points restent en contact avec les tôles métallique entre les étapes respectives.

10. Dispositif ou pièce comprenant au moins deux couches de matériau en tôle d'acier reliées par une soudure par points obtenue par résistance, le matériau d'acier contenant du phosphore et présentant une teneur en carbone comprise entre 0,16 % en poids et 0,40 % en poids, la soudure par points présentant des grains polygonaux durcis sur les bords de la zone de soudure.

11. Procédé de production d'un dispositif ou d'une pièce selon la revendication 10, dans lequel la soudure par points obtenue par résistance est produite selon l'une quelconque des revendications 1 à 9.

12. Dispositif ou pièce comprenant selon la revendication 10 ou 11, dans lequel le matériau en acier est un acier TRIP.
